# EUROPEAN PATENT APPLICATION

(11) **EP 4 659 974 A1**
(43) Date of publication of application: **10.12.2025**
(21) Application number: 25180596.6
(22) Date of filing: 03.06.2025
(51) Int. Cl.: B60H 1/00, B60H 1/32, B60L 1/00, B60L 58/20, B60P 3/20, B62D 33/04, H02J 7/00, H02J 7/34, F25D 11/00

(54) **A TRANSPORT REFRIGERATION UNIT AND A METHOD FOR CONTROLLING A BATTERY PACK**

(30) Priority: 04.06.2024 US 202463655891 P
(71) Applicant: Carrier Corporation, Palm Beach Gardens, FL 33418 (US)
(72) Inventor: CHAPEAU, Lucas, 76520 Franqueville Saint Pierre (FR)
(74) Representative: Dehns

(57) **Abstract**

Described herein is a transport refrigeration unit, TRU, (106). The TRU (106) comprises a controller (102) connected to a switching module (108) associated with a battery pack (110) and a TRU battery (104) within the TRU (106), wherein the battery pack (110) is connected to the TRU (106) via the switching module (108), wherein the controller (102) comprises a processor with access to a memory storing instructions executable by the processor, which causes the controller (102) to issue an activation electrical power signal from the TRU battery (104) to the switching module (108) to activate the battery pack (110) by establishing an electrical connection between the battery pack (110) and the TRU (106).

## Description

### CROSS-REFERENCE TO RELATED APPLICATION

This patent application claims the benefit of U.S. Provisional Patent Application No. 63/655,891 filed on June 04, 2024, which is incorporated by reference herein in its entirety.

### BACKGROUND

Embodiments described herein relate to the field of power management systems, and more particularly, to a transport refrigeration unit (TRU) and a method for controlling a battery pack.

### SUMMARY

According to a first aspect of the invention there is provided a transport refrigeration unit (TRU). The TRU comprises a controller connected to a switching module associated with a battery pack and a TRU battery within the TRU, wherein the battery pack is connected to the TRU via the switching module, wherein the controller comprises a processor with access to a memory storing instructions executable by the processor, which causes the controller to issue an activation electrical power signal from the TRU battery to the switching module to activate the battery pack by establishing an electrical connection between the battery pack and the TRU.

Optionally, upon activation of the battery pack, the controller is configured to monitor a voltage level at the battery pack and at the TRU battery; and supply electrical power from the battery pack or the TRU battery to the switching module based on the monitored voltage level.

Optionally, upon detecting the voltage level at the battery pack to be greater than the voltage level at the TRU battery, the controller is configured to enable the supply of electrical power from the battery pack to the switching module and withdraw the activation electrical power signal.

Optionally, upon detecting the voltage level at the TRU battery to be greater than the voltage level at the battery pack, the controller is configured to continue to issue the activation electrical power signal from the TRU battery to the switching module for a predefined time.

Optionally, the controller is further configured to generate an alert signal upon detecting the voltage level at the TRU battery to be greater than the voltage level at the battery pack or detecting no voltage from the battery pack for the predefined time or a predefined number of attempts upon the issuance of the activation electrical power signal from the TRU battery.

Optionally, the TRU further comprises a DC-DC converter connected between the battery pack and the switching module, wherein the DC-DC converter is configured to convert a first DC power having first electrical attributes available at the battery pack into a second DC power having second electrical attributes, and wherein the controller or the DC-DC converter is configured to supply the second DC power from the battery pack to the switching module upon activation of the battery pack.

Optionally, the second electrical attributes comprise a predefined voltage that is selected to be greater than a voltage level available at the TRU battery.

Optionally, the TRU further comprises a first switch configured between the controller and the switching module, wherein the first switch, upon actuation by a user, connects the controller to the switching module and correspondingly enables the issuance of the activation electrical power signal from the TRU battery to the switching module. Optionally, the TRU further comprises a second switch configured between the controller and the switching module, wherein the second switch, upon actuation by the user, electrically isolates the switching module from the controller and the TRU battery and correspondingly withdraws the activation electrical power signal from the TRU battery to the switching module.

Optionally, the TRU further comprises a third switch configured between the controller and the TRU battery, wherein the third switch is configured to be actuated to an open position upon activation of the battery pack, to electrically isolate the controller and the switching module from the TRU battery.

Optionally, the TRU further comprises one or more unidirectional power diodes configured between the TRU battery and the controller, and between the battery pack and the controller, wherein the one or more unidirectional power diodes are configured to disable flow of electrical power between the battery pack and the TRU battery, while allowing the flow of electrical power from the battery pack to the TRU battery, and from the TRU battery to the controller and the switching module.

Optionally, the controller, and one or more of the DC-DC converter, the first switch, the second switch, and the one or more unidirectional power diodes are enclosed in a housing to form a device that is configured to be connected between the battery pack and the TRU battery.

Optionally, the controller is connected to a battery management system (BMS) and configured to issue the activation electrical power signal from the TRU battery to the switching module via the BMS, wherein the BMS is configured to monitor one or more parameters associated with the battery pack and/or the TRU battery, and withdraw the activation electrical power signal from the TRU battery to the switching module and/or generate an alert signal upon detecting the monitored one or more parameters associated with the battery pack and/or the TRU battery to exceed a predefined threshold range.

Optionally, the controller and/or the BMS is configured to enable and control the supply of electrical power from the activated battery pack to one or more components associated with the TRU and/or a vehicle on which the TRU is installed based on the monitored one or more parameters.

According to a second aspect of the invention there is provided a method for activating and controlling a battery pack by a TRU. The method comprises the steps of issuing, by a controller, an activation electrical power signal from a TRU battery within the TRU to a switching module associated with the battery pack to correspondingly activate and connect the battery pack to the TRU.

Optionally, upon activation of the battery pack, the method comprises the steps of: monitoring, by the controller, a voltage level at the battery pack and at the TRU battery; and supplying, by the controller, electrical power from the battery pack or the TRU battery to the switching module based on the monitored voltage level.

Optionally, when the voltage level at the battery pack is detected to be greater than the voltage level at the TRU battery, the method comprises the steps of enabling the supply of electrical power from the battery pack to the switching module and withdrawing the activation electrical power signal.

Optionally, when the voltage level at the TRU battery is detected to be greater than the voltage level at the battery pack, the method comprises the steps of continuing to issue the activation electrical power signal from the TRU battery to the switching module for a predefined time.

Optionally, the method comprises the steps of generating an alert signal when the voltage level at the TRU battery is detected to be greater than the voltage level at the battery pack or no voltage is detected from the battery pack for the predefined time or a predefined number of attempts upon the issuance of the activation electrical power signal from the TRU battery.

Optionally, the method comprises the steps of: monitoring, by a BMS, one or more parameters associated with the battery pack and/or the TRU battery; and withdrawing, by the BMS, the activation electrical power signal from the TRU battery to the switching module and/or generating an alert signal when the monitored one or more parameters associated with the battery pack and/or the TRU battery exceed a predefined threshold range.

Optionally, the method comprises the steps of enabling and controlling, by the controller and/or the BMS, the supply of electrical power from the activated battery pack to one or more components associated with the TRU and/or a vehicle on which the TRU is installed, based on the monitored one or more parameters.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the invention by way of example only and are incorporated in and constitute a part of this specification. The drawings illustrate exemplary embodiments of the invention and, together with the description, serve to explain the principles of the invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1A illustrates an exemplary representation of a system comprising a transport refrigeration unit (TRU) configured with a battery pack associated with a vehicle.
FIGs. 1B to 1D illustrate the operation of the system of FIG. 1A at various steps during activation and controlling of the battery pack.
FIG. 2A illustrates an exemplary circuit diagram depicting the detailed architecture of an embodiment of the system of FIG. 1A.
FIGs. 2B and 2C illustrate the operation of the system of FIG. 2A at various steps during activation and controlling of the battery pack.
FIG. 3A illustrates an exemplary circuit diagram depicting the detailed architecture of another embodiment of the system of FIG. 1A.
FIGs. 3B and 3C illustrate the operation of the system of FIG. 3A at various steps during activation and controlling of the battery pack.
FIG. 4 illustrates exemplary steps involved in a method for activating and controlling a battery pack associated with a vehicle by a transport refrigeration unit (TRU).

### DETAILED DESCRIPTION

The following is a detailed description of embodiments of the invention depicted in the accompanying drawings. The embodiments are in such detail as to clearly communicate the invention. However, the amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the specification, the components of embodiments of the invention described herein may be positioned in any desired orientation. Thus, the use of terms such as "above", "below", "upper", "lower", "first", "second", or other like terms to describe a spatial relationship between various components or to describe the spatial orientation of aspects of such components should be understood to describe a relative relationship between the components or a spatial orientation of aspects of such components, respectively, described herein may be oriented in any desired direction.

Electric and hybrid vehicles rely on battery packs to power the vehicle's drivetrain. These battery packs are typically activated by a switching module comprising relays (also known as contactors) which require an initial external power source for their activation. This is necessary because the main battery pack cannot close its own relays if the battery pack is entirely powered down.

Traditionally, a secondary battery is used exclusively to supply the power needed to activate the switching module or close these relays. This approach, however, may introduce additional costs, maintenance requirements, and complexity into the vehicle's design and operation. Each of these batteries adds weight, requires space, and necessitates an independent charging system, further complicating the vehicle's electrical architecture and increasing the overall vehicle cost.

The traditional dual battery system employed in vehicles, while effective, results in increased production and maintenance costs, complexity in battery management systems, additional weight, and use of space that may otherwise be allocated for more important vehicle functions or for reducing the vehicle's overall footprint. These drawbacks highlight the need for a more integrated approach to managing vehicle power requirements.

In vehicles equipped with a transport refrigeration unit, commonly used in commercial transportation to maintain perishable goods at controlled temperatures, an additional battery is already present. Despite its presence, this TRU-associated battery has traditionally not been utilized for any functions outside of the TRU system, leading to underutilization of available resources. Given the increasing pressure to optimize vehicle design for cost, weight, and efficiency, it becomes beneficial to devise a solution that leverages existing resources such as the TRU battery to fulfil additional roles beyond its primary purpose.

There is therefore a need for a solution that may effectively and efficiently utilize the TRU battery to aid in the starting sequence of the main vehicle battery pack while ensuring that the energy consumption does not affect the primary function of the TRU.

Embodiments of the invention provide improved methods and systems that simplify the vehicle's electrical system by utilizing the TRU battery to power the vehicle's switching module or main relays during the battery pack start-up sequence, thus eliminating the need for a dedicated secondary battery solely for this purpose. This approach may not only reduce costs and complexity but may also contribute to a more efficient and environmentally friendly vehicle design.

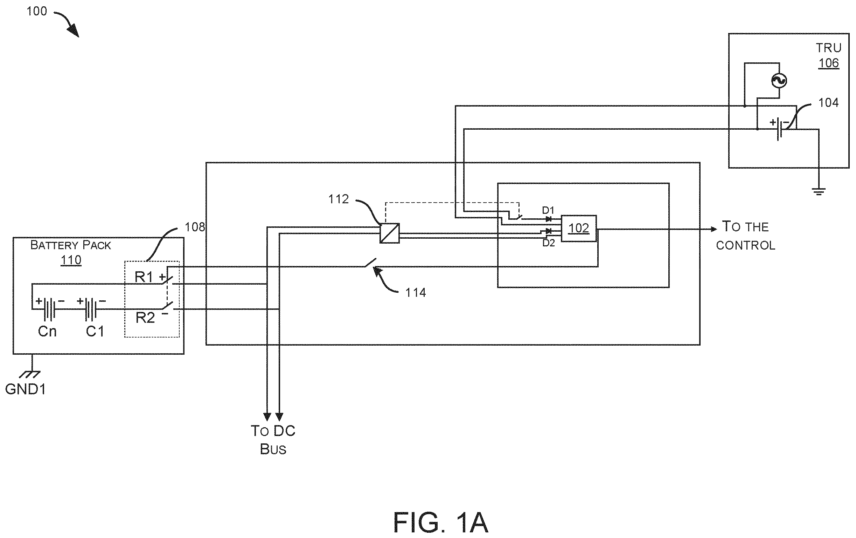

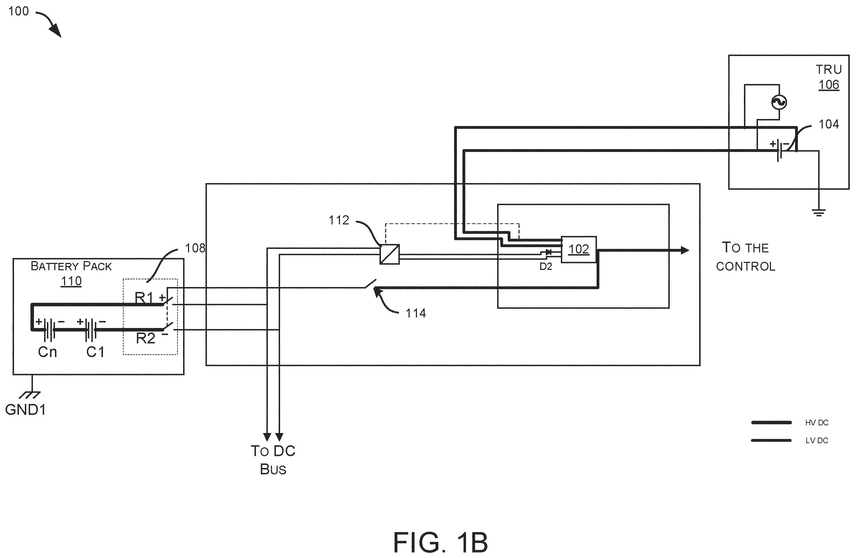

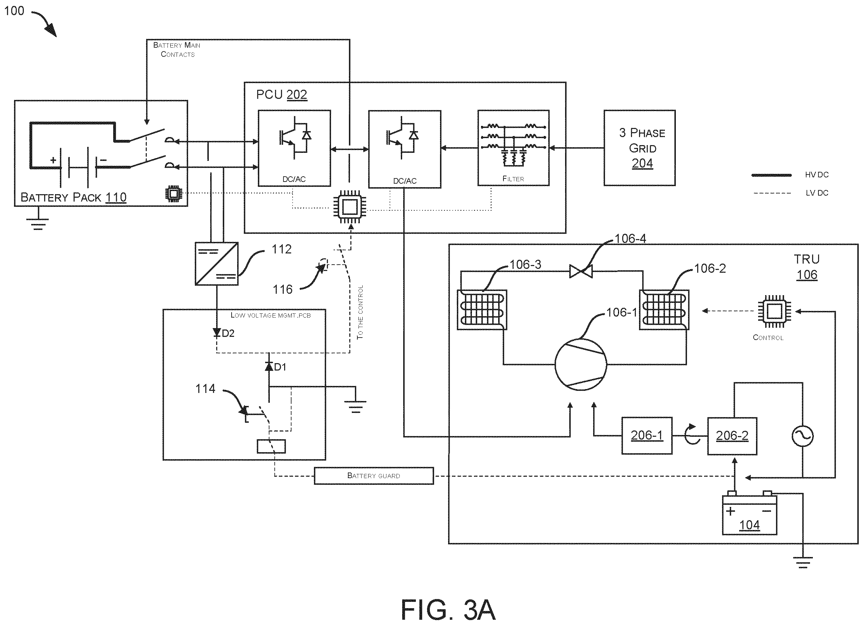

Referring to FIGs. 1A to 3C, a system 100 comprising a transport refrigeration unit (TRU) configured with a battery pack of a vehicle is disclosed. The system 100 may include a controller 102 connected to a TRU battery 104 of the TRU 106 and a switching module 108 associated with the battery pack 110. In one or more embodiments, the controller 102 may be a control unit of the TRU 106, however, the controller 102 may also be a separate component that may be connected to a control unit of the TRU 106. Further, the TRU battery 104 may be enclosed within the housing of the TRU 106, however, the TRU battery 104 may also be attached to the housing of the TRU 106. Furthermore, the switching module 108 of the battery pack 110 may include one or more electromagnetic relays (R1, R2) (also referred to as contactors) that may be configured to be activated using electrical power. The activated switching module 108 may establish an electrical connection between the battery pack 110 and one or more components associated with the vehicle and/or the TRU 106.

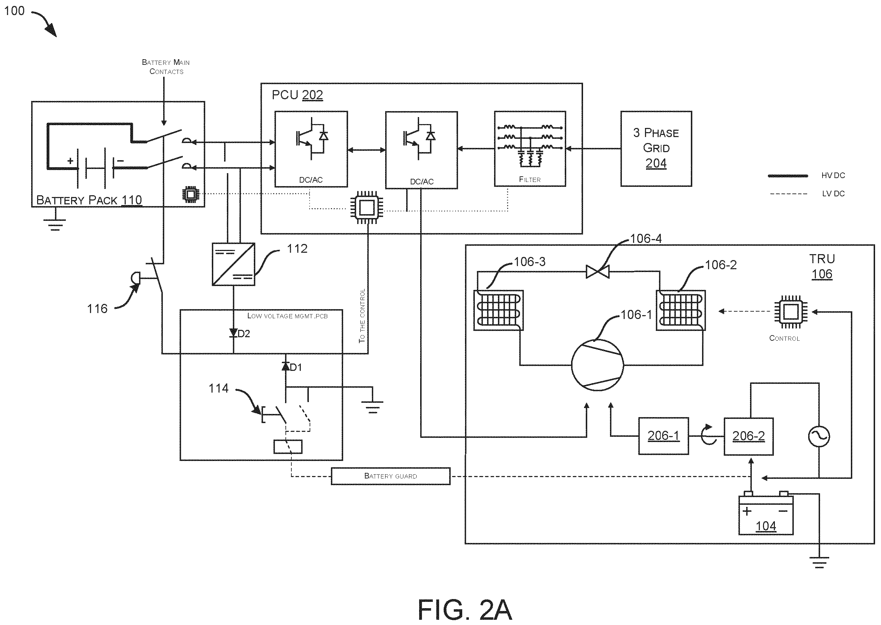

In one or more embodiments, the controller 102 may comprise a processor with access to a memory storing instructions executable by the processors, which causes the controller 102 to perform one or more designated operations. The controller 102 may be configured to issue an activation electrical power signal from the TRU battery 104 to the switching module 108 to activate the battery pack 110 and establish an electrical connection between the battery pack 110 and the TRU 106. Further, once the battery pack 110 is activated, the controller 102 may be configured to enable the supply of electrical power or the activation electrical power signal from the battery pack 110 to the switching module 108 to keep the battery pack 110 activated and withdraw the activation electrical power signal from the TRU battery 104 to the switching module 108. The detailed operation of the TRU 106 or controller 102 for controlling the battery pack 110 has been described later in conjunction with FIGs. 2A to 3C.

In one or more embodiments, the battery pack 110 may be positioned remote to the TRU and be electrically connected to the components of the TRU 106 and, in a particular embodiment, to the vehicle via a power conversion unit (PCU) 202 and the switching module 108 as shown in FIGs. 2A to 3C. In one or more embodiments, the PCU 202 may be associated with the TRU 106. However, in other embodiments, the PCU 202 may also be associated with the battery pack 110 or the controller 102. The detailed construction and operation of the PCU 202 have been described in further paragraphs.

In one or more embodiments, the TRU battery 104 may be configured to directly issue and supply an activation electrical power signal or electrical power to the switching module 108 without passing the PCU 202 as shown in FIGs. 2A to 2C. Further, in one or more embodiments, the TRU battery 104 may be configured to directly issue and supply the activation electrical power signal or electrical power to the switching module 108 via the PCU 202 as shown in FIGs. 3A to 3C. The detailed working of the controller 102 in FIGs 2A to 3C has been described in further paragraphs.

Further, the PCU 202 may be configured to connect the battery pack 110 and/or the components of the vehicle and the TRU 106 to an external power source 204 such as an electric grid and a battery charging station. In such embodiments, the switching module 108 upon actuation using the electrical power from the activated battery pack 110 may connect the battery pack 110 to the external power source 204 and/or the components of the vehicle and the TRU 106. The connection of the battery pack 110 and the TRU 106 with the external power source 204 may enable charging of the battery pack 110 and the TRU battery 104 using the external power source 204 and/or further enable the supply of electrical power from the external power source 204 to the components of the vehicle and the TRU 106 via the PCU 202 to drive the components of the vehicle and the TRU 106 while charging the battery pack 110 and/or the TRU battery 104.

In one or more embodiments, the TRU 106 may include a refrigeration circuit comprising an evaporator 106-3 fluidically connected to a condenser 106-2 via a compressor 106-1 and an expansion valve 106-4. The TRU 106 may further include the components including but not limited to one or more fans, an electric heater, a control panel, and a thermostat. The compressor 106-1 and other components of the TRU 106 may be configured to receive electrical power from the activated battery pack 110 to drive the refrigeration circuit and the overall TRU 106. In one or more embodiments, the TRU battery 104 may be a low-power battery having a voltage rating in a range of 12-18 volts, but not limited to the like, that may be configured to issue and supply a wake-up signal (ranging from 12-18 volts but not limited to the like) to the TRU 106 to wake up or activate the TRU 106. The TRU battery 104 may also issue and supply the activation electrical power signal from the TRU battery 104 to the switching module 108 to activate the battery pack 110. Once the TRU 106 and the battery pack 110 are activated by the TRU battery 104, the TRU 106 may be configured to control the supply of electrical power from the activated battery pack 110 to the components of the vehicle or the TRU 106 via a DC bus to drive the TRU 106 as well as the vehicle, based on electrical power consumption of the corresponding components of the vehicle and the TRU 106.

Further, in one or more embodiments, the TRU 106 may include an axle generator (not shown) or an electric generator 206-1 configured with a fuel-powered engine 206-2. The generator 206-1 may be configured to generate the electric power for the compressor and other components of the TRU 106. In one or more embodiments, the TRU battery 104 may be connected to the axle generator or the engine 206-2 of the electric generator 206-1 and configured to supply an actuation signal (ranging from 12-18 volts, but not limited to the like) to start (activate) or stop the corresponding generator. Once the generator is activated by the TRU battery 104, the generator and/or the activated battery pack 110 may supply electrical power to the TRU 106 to drive the overall TRU 106.

In one or more embodiments, the battery pack 110 may be a high-power battery (having voltage in a range of 200 to 800 volts, but not limited to the like) that may include one or more battery cells (C1 to Cn). The power rating of the battery pack 110 may be substantially higher than that of the TRU battery 104. The PCU 202 may be configured to convert electrical power received and/or supplied by the battery pack 110, the TRU battery 104, the generator, and the external power source 204 in a range suitable for the battery pack 110, the TRU 106, and the external power source 204.

In one or more embodiments, the PCU 202 may facilitate managing and converting electrical power to ensure optimal performance, efficiency, and compatibility with connected loads (the switching module 108 and the components of the TRU 106 and vehicle) or charging sources (the battery pack 110, the TRU battery 104, the generator 206-1, or external power source 204). The PCU 202 may include a separate control unit that may be connected to the controller 102 or the TRU 106 to monitor and control the operation of the PCU 202. The PCU 202 may include one or more rectifiers with one or more filters, one or more inverters, and/or one or more DC-DC converters (not shown). The rectifier(s) and filters may be configured to convert the AC power supplied by the generator or external power source 204 (grid) into DC power for the battery pack 110, the TRU battery 104, the switching module 108, and/or the DC power-based components associated with the vehicle and the TRU 106. Further, the inverters may be configured to convert the DC power level output by the battery pack 110 into AC power for the AC power-based components and/or the external power source 204 (grid). Furthermore, the DC-DC converter may be configured to adjust the DC power level output by the battery pack 110 and/or the TRU battery 104 to match the input DC level for the switching module 108 and the DC power-based components. In addition, in one or more embodiments, the PCU 202 may include a bi-directional AC-DC convertor (operating as the rectifier as well as the inverter) configured to facilitate electrical power exchange between the battery pack 110 and the external power source 204. The PCU 202 may accordingly facilitate maximizing energy utilization and protection of the battery pack 110 and the components of the vehicle and TRU 106 from over-voltage or under-voltage conditions.

In one or more embodiments, upon activation of the battery pack 110, the controller 102 may be configured to monitor the voltage level of the battery pack 110 and the TRU battery 104. The controller 102 may accordingly control the supply of electrical power from the battery pack 110 or the TRU battery 104 to the switching module 108 based on the monitored voltage level. For instance, in one or more embodiments, upon detecting the voltage level at the battery pack 110 to be greater than the voltage level at the TRU battery 104, the controller 102 may be configured to enable the supply of electrical power from the battery pack 110 to the switching module 108 and withdraw the activation electrical power signal from the TRU battery 104 to the switching module 108.

Further, in one or more embodiments, upon detecting the voltage level at the TRU battery 104 to be greater than the voltage level at the battery pack 110, the controller 102 may be configured to continue to issue the activation electrical power signal from the TRU battery 104 to the switching module 108 for a predefined time. The predefined time may be selected based on the power available at the TRU battery 104, such that power available in the TRU battery 104 is not completely exhausted on the switching module 108. Accordingly, in one or more embodiments, the controller 102 may be configured to generate an alert signal upon detecting the voltage level at the TRU battery 104 to be greater than the voltage level of the battery pack 110 or detecting no voltage from the battery pack 110 for the predefined time or a predefined number of attempts upon the issuance of the activation electrical power signal from the TRU battery 104. This may allow the operator or users of the TRU 106 or vehicle to take precautionary measures before the TRU battery 104 is completely depleted. In one or more embodiments, the alert signal may be transmitted over a human-machine interface provided in a cabin of the vehicle and/or on the battery pack. Further, the alert signal may also be transmitted over a mobile device of the users.

In one or more embodiments, the TRU 106 may include a DC-DC converter 112 connected between the battery pack 110 and the switching module 108. The DC-DC converter 112 may be configured to convert a first DC power having the first electrical attributes available at the battery pack 110 into a second DC power having second electrical attributes. Further, the controller 102 or the DC-DC converter 112 may be configured to supply the second DC power from the battery pack 110 to the switching module 108 upon activation of the battery pack 110. Furthermore, the second electrical attribute of the second DC power may be a predefined voltage that may be selected to be greater than the voltage level available at the TRU battery 104.

In an example, but not limited to the like, the voltage available at the battery pack 110 may be 400 V and the DC-DC converter 112 may be a high voltage to low voltage DC-DC converter that may be configured to convert the high voltage (400 V) at the battery pack 110 into a low voltage range of 12 to 18 V for the switching module 108 or controller 102. Further, the voltage available at the TRU battery 104 may also be in a low voltage range of 12 to 18 V. However, the DC-DC converter 112 may be selected or configured such that the voltage available at its output may remain greater than the maximum voltage level available at the TRU battery 104.

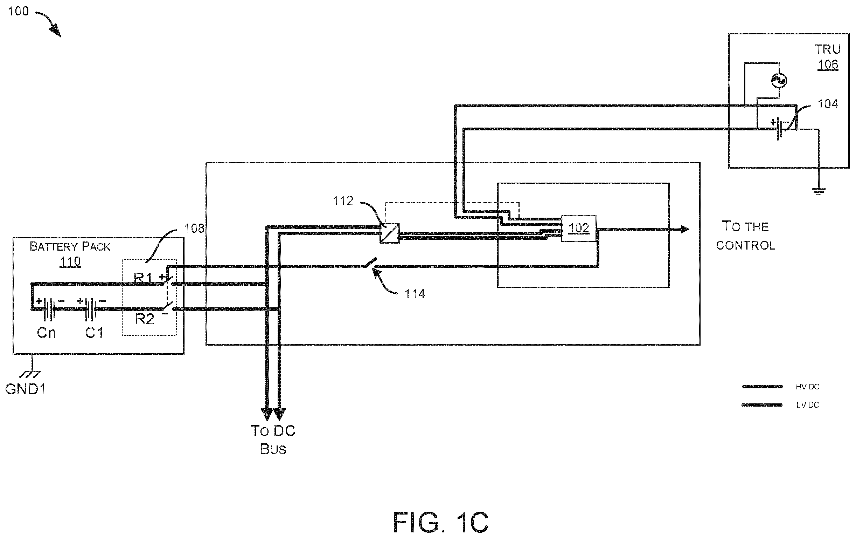

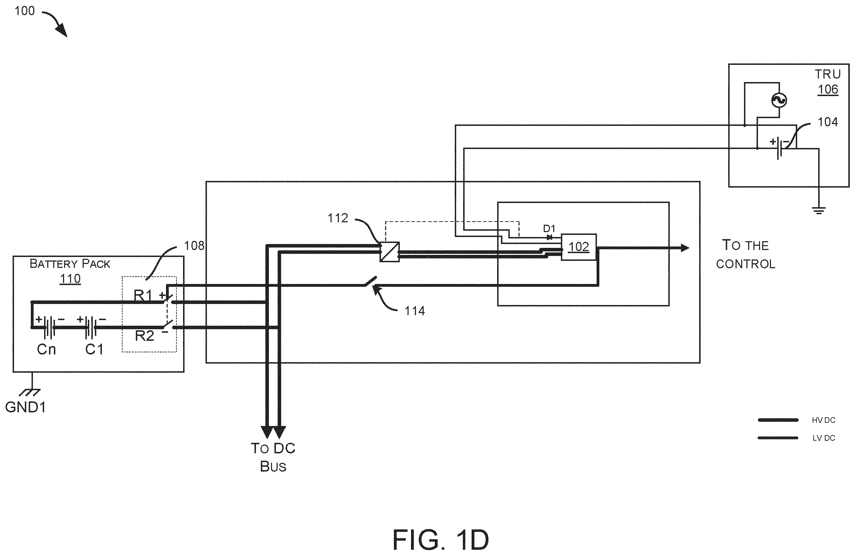

As a result, once the switching module 108 is activated by the TRU battery 104, the controller 102 may detect two voltages (one from the TRU battery 104 and the other from the battery pack 110) as shown in FIG. 1C and accordingly control the supply of electrical power from the battery pack 110 or the TRU battery 104 to the switching module 108 based on the voltage levels of the TRU battery 104 and the battery pack 110. For instance, if the voltage level at the output of the DC-DC converter is detected to be 18 V and the voltage level at the TRU battery 104 is detected to be 17 V, the controller 102 may be configured to enable the supply of electrical power from the battery pack 110 to the switching module 108 and withdraw the activation electrical power signal from the TRU battery 104 to the switching module 108 as shown in FIG. 1D. Further, if the voltage level at the output of the DC-DC converter is detected to be 17 V and the voltage level at the TRU battery 104 is detected to be 18 V, the controller 102 may be configured to continue to issue the activation electrical power signal from the TRU battery 104 to the switching module 108 for a predefined time. Similarly. if no voltage is detected at the battery pack 110, the controller 102 may be configured to continue to issue the activation electrical power signal from the TRU battery 104 to the switching module 108 for the predefined time.

In one or more embodiments, the system 100 may include a first switch 114 configured between the controller 102 and the switching module 108. The first switch 114, upon actuation by the user, may connect the controller 102 to the switching module 108 and correspondingly enable the issuance of the activation electrical power signal from the TRU battery 104 to the switching module 108. In addition, the system 100 may include a second switch 116 configured between the controller 102 and the switching module 108. The second switch 116, upon actuation by the user, may electrically isolate the switching module 108 from the controller 102 and the TRU battery 104 and correspondingly withdraw the activation electrical power signal from the TRU battery 104 to the switching module 108. This may allow the user to quickly stop the transfer of electrical power from the TRU battery 104 to the switching module 108. Further, the system 100 may include a third switch configured between the controller 102 and the TRU battery 104. The third switch may be configured to be actuated to an open position upon activation of the battery pack 110, to electrically isolate the controller 102 and the switching module 108 from the TRU battery 104.

In one or more embodiments, the TRU 106 may include one or more unidirectional power diodes D1, D2 configured between the TRU battery 104 and the controller 102, and between the battery pack 110 and the controller 102. The unidirectional power diodes D1, D2 may be configured to disable the flow of electrical power between the battery pack 110 and the TRU battery 104 while allowing the flow of electrical power from the battery pack 110 to the TRU 106, and from the TRU battery 104 to the controller 102 and the switching module 108. As a result, when the TRU battery 104 is issuing the activation electrical power signal to the switching module 108, the unidirectional power diode D2 may disable the flow of electrical power between the battery pack 110 and the TRU battery 104. Further, when the battery pack 110 is issuing the activation electrical power signal to the switching module 108, the other unidirectional power diode D1 may disable the flow of electrical power between the TRU battery 104 and the battery pack 110.

In one or more embodiments, the controller 102, and one or more of the DC-DC converters, the first switch 114, the second switch 116, and the unidirectional power diodes may be enclosed in a housing to form a device that may be configured to be connected between the battery pack 110 and the TRU battery 104.

In one or more embodiments, the controller 102 may be connected to a battery management system (BMS) and configured to issue the activation electrical power signal from the TRU battery 104 to the switching module 108 via the BMS. Further, the BMS may be configured to monitor one or more parameters associated with the battery pack 110 and/or the TRU battery 104, and withdraw the activation electrical power signal from the TRU battery 104 to the switching module 108 and/or generate an alert signal upon detecting the monitored parameters of the battery pack 110 to exceed a predefined threshold range. In one or more embodiments, the parameters associated with the battery pack 110 may include but are not limited to the state of charge (SoC), health, insulation resistance, available power, and temperature. For instance, if the temperature of the TRU battery 104 is monitored to be above a predefined threshold temperature, the BMS may withdraw the activation electrical power signal from the TRU battery 104 to the switching module 108 and/or further generate the alert signal.

While various embodiments herein have been described for the controller 102 being associated with the TRU 106, however, the controller 102 may also be a part of the vehicle or a separate component, and all such embodiments are well within the scope of this invention as set out in the appended claims.

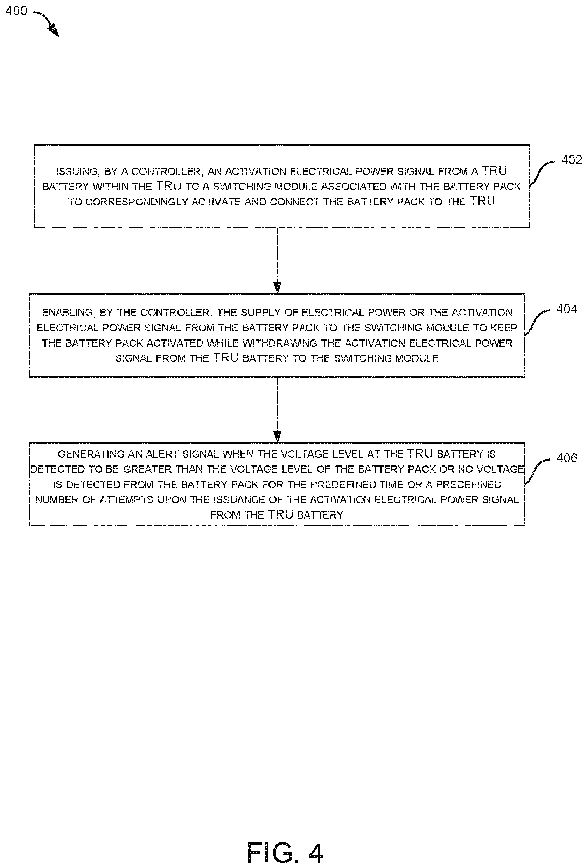

Referring to FIG. 4, a method for activating and controlling a battery pack associated with a vehicle by a transport refrigeration unit (TRU) is disclosed. Method 400 may involve the controller, the switching module, the battery pack, the TRU battery, and other components of the system of FIG. 1A to 3C. Method 400 may include step 402 of issuing, by a controller, an activation electrical power signal from a TRU battery within the TRU to a switching module associated with the battery pack to correspondingly activate and connect the battery pack to the TRU. Further, once the battery pack is activated, method 400 may include step 404 of enabling, by the controller, the supply of electrical power or the activation electrical power signal from the battery pack to the switching module to keep the battery pack activated while withdrawing the activation electrical power signal from the TRU battery to the switching module. Furthermore, method 400 may include the steps of enabling and controlling, by the controller, the supply of electrical power from the activated battery pack to one or more components associated with the TRU and/or the vehicle on which the TRU is installed, based on electrical power consumption of the corresponding components.

In one or more embodiments, upon activation of the battery pack, method 400 may include the steps of monitoring, by the controller, voltage level at the battery pack and at the TRU battery, and supplying electrical power from the battery pack or the TRU battery to the switching module based on the monitored voltage level. For instance, in one or more embodiments, when the voltage level at the battery pack is detected to be greater than the voltage level of the TRU battery, method 400 may include the steps of enabling the supply of electrical power from the battery pack to the switching module and withdrawing the activation electrical power signal from of the TRU battery to the switching module. Further, in one or more embodiments, when the voltage level at the TRU battery is detected to be greater than the voltage level of the battery pack, method 400 may include the steps of continuing to issue the activation electrical power signal from the TRU battery to the switching module for a predefined time.

In addition, in one or more embodiments, method 400 may include step 406 of generating an alert signal when the voltage level at the TRU battery is detected to be greater than the voltage level of the battery pack or no voltage is detected from the battery pack for the predefined time or a predefined number of attempts upon the issuance of the activation electrical power signal from the TRU battery.

In one or more embodiments, the controller may be connected to a battery management system (BMS) and configured to issue the activation electrical power signal from the TRU battery to the switching module via the BMS. In such embodiments, method 400 may include the steps of monitoring, by the BMS, one or more parameters associated with the battery pack and/or the TRU battery and further withdrawing the activation electrical power signal from the TRU battery to the switching module and/or generating an alert signal when the monitored parameters of the battery pack exceed a predefined threshold range. Further, method 400 may include the steps of enabling and controlling, by the controller and/or the BMS, the supply of electrical power from the activated battery pack to the components of the TRU and/or the vehicle, based on the monitored parameters. For instance, if the temperature of the TRU battery is monitored to be above a predefined threshold temperature, the BMS may withdraw the activation electrical power signal from the TRU battery to the switching module and/or further generate an alert signal.

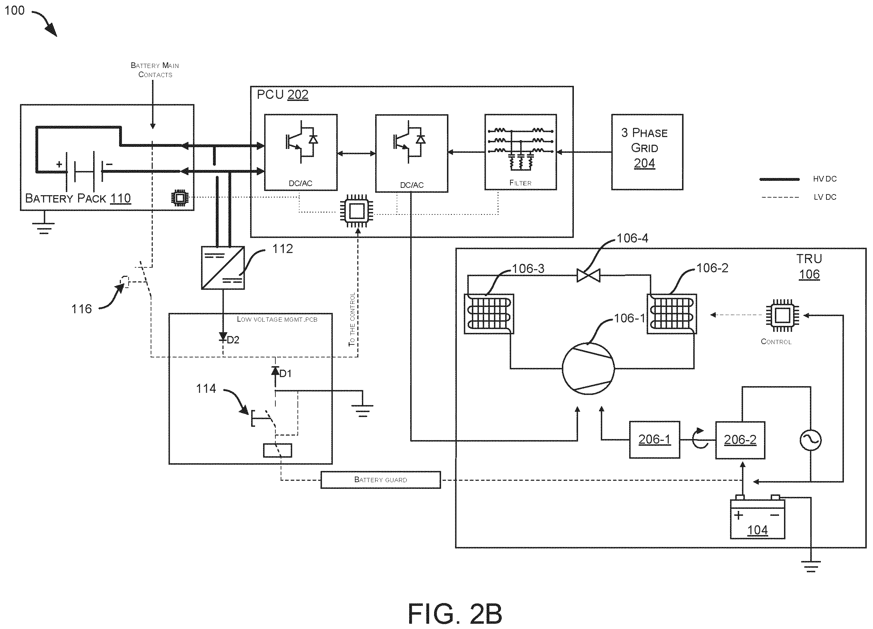

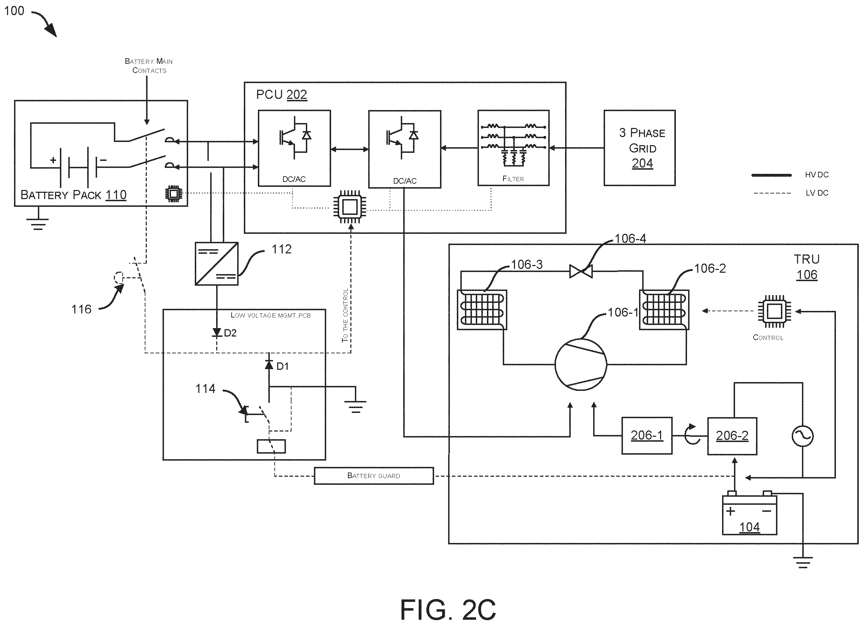

Referring to FIGs. 2A to 2C, an exemplary circuit diagram depicting the detailed architecture of an embodiment of the system 100 of FIG. 1A is disclosed, wherein the TRU battery 104 is configured to directly issue and supply activation electrical power signal or electrical power to the switching module 108 without passing through the PCU 202. Initially, once the first switch 114 is actuated as shown in FIG. 2B, the controller 102 may directly issue an activation electrical power signal from the TRU battery 104 to the switching module 108 to activate the battery pack 110 and establish an electrical connection between the battery pack 110 and the TRU 106. Further, once the battery pack 110 is activated as shown in FIG. 2C, the controller 102 may be configured to enable the supply of electrical power or the activation electrical power signal from the battery pack 110 to the switching module 108 to keep the battery pack 110 activated and simultaneously deactivate the first switch 114 to withdraw the activation electrical power signal from the TRU battery 104 to the switching module 108. Furthermore, the PCU 202 and BMS may control the supply of electrical power from the activated battery to the components of the TRU 106 and the vehicle.

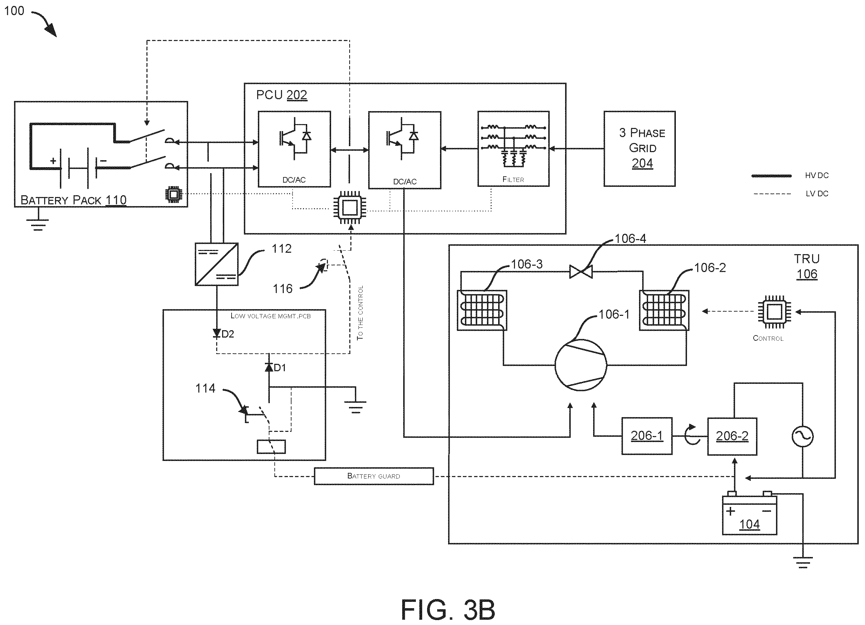

Referring to FIGs. 3A to 3C, an exemplary circuit diagram depicting the detailed architecture of another embodiment of the system 100 of FIG. 1A is disclosed, wherein the TRU battery 104 is configured to issue and supply an activation electrical power signal or electrical power to the switching module 108 via the PCU 202. Initially, once the first switch 114 is actuated as shown in FIG. 3B, the controller 102 may issue an activation electrical power signal from the TRU battery 104 to the switching module 108 via the PCU 202 or BMS to activate the battery pack 110 and establish an electrical connection between the battery pack 110 and the TRU 106. However, the BMS or PCU 202 may first monitor one or more parameters associated with the battery pack 110 and/or the TRU battery 104 before supplying the issued activation electrical power signal to the switching module 108. Further, once the monitored parameters of the battery pack 110 are found to be within a predefined threshold range, the BMS or PCU 202 may supply the issued activation electrical power signal from the TRU battery 104 to the switching module 108 and correspondingly activate the battery pack 110.

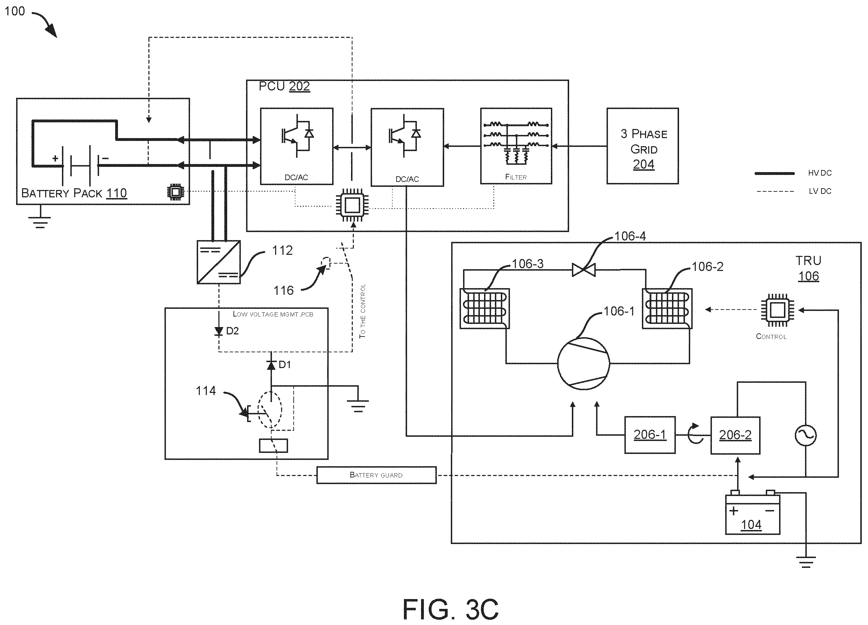

Further, once the battery pack 110 is activated as shown in FIG. 3C, the PCU 202 or the BMS may be configured to enable the supply of electrical power or the activation electrical power signal from the battery pack 110 to the switching module 108 to keep the battery pack 110 activated and simultaneously deactivate the first switch 114 to withdraw the activation electrical power signal from the TRU battery 104 to the switching module 108. Furthermore, the PCU 202 and BMS may control the supply of electrical power from the activated battery to the components of the TRU 106 and the vehicle.

Thus, embodiments of the invention address the limitations associated with the existing battery packs, by providing an improved method and system that simplifies the vehicle's electrical system by utilizing the TRU battery to power the vehicle's switching module or the relays during the battery pack start-up sequence, thus eliminating the need for a dedicated secondary battery solely for this purpose.

While the invention has been described with reference to exemplary embodiments, it will be understood by those skilled in the art that various changes may be made and equivalents may be substituted for elements thereof without departing from the scope of the invention as defined by the appended claims. Modifications may be made to adopt a particular situation or material to the teachings of the invention without departing from the scope thereof. Therefore, it is intended that the invention not be limited to the particular embodiment(s) disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A transport refrigeration unit, TRU, (106) comprising:
a controller (102) connected to a switching module (108) associated with a battery pack (110) and a TRU battery (104) within the TRU, wherein the battery pack is connected to the TRU via the switching module,
wherein the controller comprises a processor with access to a memory storing instructions executable by the processor, which causes the controller to issue an activation electrical power signal from the TRU battery to the switching module to activate the battery pack by establishing an electrical connection between the battery pack and the TRU.

2. The TRU (106) of claim 1, wherein upon activation of the battery pack (110), the controller (102) is configured to:
monitor voltage level at the battery pack and at the TRU battery (104); and
supply electrical power from the battery pack or the TRU battery to the switching module (108) based on the monitored voltage level.

3. The TRU (106) of claim 2, wherein upon detecting the voltage level at the battery pack (110) to be greater than the voltage level at the TRU battery (104), the controller (102) is configured to enable the supply of electrical power from the battery pack to the switching module (108) and withdraw the activation electrical power signal.

4. The TRU (106) of any of claims 2 or 3, wherein upon detecting the voltage level at the TRU battery (104) to be greater than the voltage level at the battery pack (110), the controller (102) is configured to continue to issue the activation electrical power signal from the TRU battery to the switching module (108) for a predefined time.

5. The TRU (106) of claim 4, wherein the controller (102) is further configured to generate an alert signal upon detecting the voltage level at the TRU battery (104) to be greater than the voltage level at the battery pack (110) or detecting no voltage from the battery pack for the predefined time or a predefined number of attempts upon the issuance of the activation electrical power signal from the TRU battery.

6. The TRU (106) of any preceding claim, wherein the TRU further comprises a DC-DC converter (112) connected between the battery pack (110) and the switching module (108), wherein the DC-DC converter is configured to convert a first DC power having first electrical attributes available at the battery pack into a second DC power having second electrical attributes, and wherein the controller (102) or the DC-DC converter is configured to supply the second DC power from the battery pack to the switching module upon activation of the battery pack;
optionally, wherein the second electrical attributes comprise a predefined voltage that is selected to be greater than a voltage level available at the TRU battery (104).

7. The TRU (106) of any preceding claim, wherein the TRU further comprises:
a first switch (114) configured between the controller (102) and the switching module (108), wherein the first switch, upon actuation by a user, connects the controller to the switching module and correspondingly enables the issuance of the activation electrical power signal from the TRU battery (104) to the switching module; and
a second switch (116) configured between the controller and the switching module, wherein the second switch, upon actuation by the user, electrically isolates the switching module from the controller and the TRU battery, and correspondingly withdraws the activation electrical power signal from the TRU battery to the switching module.

8. The TRU (106) of any preceding claim , wherein the TRU further comprises a third switch configured between the controller (102) and the TRU battery (104), and wherein the third switch is configured to be actuated to an open position upon activation of the battery pack (110), to electrically isolate the controller and the switching module (108) from the TRU battery; and/or
wherein the TRU further comprises one or more unidirectional power diodes (D1, D2) configured between the TRU battery (104) and the controller (102), and between the battery pack (110) and the controller, and wherein the one or more unidirectional power diodes are configured to disable flow of electrical power between the battery pack and the TRU battery, while allowing the flow of electrical power from the battery pack to the TRU battery, and from the TRU battery to the controller and the switching module (108).

9. The TRU of claim 8 when dependent on claim 7 when dependent on claim 6, wherein the controller, and one or more of the DC-DC converter (112), the first switch (114), the second switch (116), and the one or more unidirectional power diodes are enclosed in a housing to form a device that is configured to be connected between the battery pack and the TRU battery.

10. The TRU (106) of any preceding claim, wherein the controller (102) is connected to a battery management system, BMS, and configured to issue the activation electrical power signal from the TRU battery (104) to the switching module (108) via the BMS,
wherein the BMS is configured to:
monitor one or more parameters associated with the battery pack (110) and/or the TRU battery; and
withdraw the activation electrical power signal from the TRU battery to the switching module and/or generate an alert signal upon detecting the monitored one or more parameters associated with the battery pack and/or the TRU battery to exceed a predefined threshold range;
optionally, wherein the controller and/or the BMS are configured to enable and control the supply of electrical power from the activated battery pack to one or more components associated with the TRU and/or a vehicle on which the TRU is installed based on the monitored one or more parameters.

11. A method for activating and controlling a battery pack (110) by a transport refrigeration unit, TRU, (106), the method comprising the steps of:
issuing, by a controller (102), an activation electrical power signal from a TRU battery (104) within the TRU to a switching module (108) associated with the battery pack to correspondingly activate and connect the battery pack to the TRU.

12. The method of claim 11, wherein upon activation of the battery pack (110), the method comprises the steps of:
monitoring, by the controller (102), a voltage level at the battery pack and at the TRU battery (104); and
supplying, by the controller, electrical power from the battery pack or the TRU battery to the switching module (108) based on the monitored voltage level.

13. The method of claim 12, wherein when the voltage level at the battery pack (110) is detected to be greater than the voltage level at the TRU battery (104), the method comprises the steps of enabling the supply of electrical power from the battery pack to the switching module (108) and withdrawing the activation electrical power signal.

14. The method of any of claims 12 or 13, wherein when the voltage level at the TRU battery (104) is detected to be greater than the voltage level at the battery pack (110), the method comprises the steps of continuing to issue the activation electrical power signal from the TRU battery to the switching module (108) for a predefined time; optionally, wherein the method further comprises the steps of generating an alert signal when the voltage level at the TRU battery is detected to be greater than the voltage level at the battery pack or no voltage is detected from the battery pack for the predefined time or a predefined number of attempts upon the issuance of the activation electrical power signal from the TRU battery.

15. The method of any of claims 11 to 14, wherein the method further comprises the steps of:
monitoring, by a battery management system, BMS, one or more parameters associated with the battery pack (110) and/or the TRU battery (104); and
withdrawing, by the BMS, the activation electrical power signal from the TRU battery to the switching module (108) and/or generating an alert signal when the monitored one or more parameters associated with the battery pack and/or the TRU battery exceed a predefined threshold range;
optionally, wherein the method further comprises the steps of enabling and controlling, by the controller (102) and/or the BMS, the supply of electrical power from the activated battery pack to one or more components associated with the TRU (106) and/or a vehicle on which the TRU is installed, based on the monitored one or more parameters.
